# EUROPEAN PATENT APPLICATION

(11) **EP 4 250 139 A1**
(43) Date of publication of application: **27.09.2023**
(21) Application number: 22189652.5
(22) Date of filing: 10.08.2022
(51) Int. Cl.: G06F 16/93, G06F 16/532

(54) **INFORMATION PROCESSING APPARATUS, PROGRAM, AND INFORMATION PROCESSING METHOD**

(30) Priority: 22.03.2022 JP 2022045039
(71) Applicant: Fujifilm Business Innovation Corp., Tokyo 107-0052 (JP)
(72) Inventor: MARUYAMA, Atsushi, Yokohama (JP)
(74) Representative: Meissner Bolte Partnerschaft mbB

(57) **Abstract**

An information processing apparatus includes a processor configured to: execute a first acceptance process of accepting one or more manipulations each performed on a corresponding piece of data in a manipulation screen; execute a recording process of recording each of the one or more manipulations in association with the corresponding piece of data; execute a second acceptance process of accepting a search manipulation in a search screen configured to imitate the manipulation screen; and execute a presentation process of presenting at least one piece of data associated with the search manipulation accepted in the second acceptance process.

## Description

### Background

### (i) Technical Field

The present disclosure relates to an information processing apparatus, a program, and an information processing method.

### (ii) Related Art

A search for a piece of data such as a document is usually performed by using a piece of information contained in the piece of data as a search key, such as a search for a string or a search for an image.

A communication support system described in Japanese Unexamined Patent Application Publication No. 2020-154491 includes a document extraction unit configured to extract a document related to a conversation held during a specific period, a changed-portion extraction unit configured to extract a changed portion subjected to a change during the specific period for the document extraction unit, and an output control unit configured to cause the changed portion extracted by the changed-portion extraction unit to be output. When searching for a document, this system uses an editing history of a string in the document to determine whether to select the document as a target.

A method disclosed in Japanese Unexamined Patent Application Publication No. 2004-199485 is configured to manage an annotation attached to a document and an attribute of a person who attaches the annotation in association with each other and search for an annotation attached by a person who has an attribute selected as a search criterion.

Japanese Patent No. 6565249 discloses a system configured to visualize the flow of an activity, such as referring to a document or transmitting an email, performed by participants in a meeting such as a conference. To visualize the flow, the system uses a document used in a meeting such as a conference and information regarding a process history of an activity performed regarding a document, such as referring to a document or transmitting an email. In this system, when a user specifies an event, a flow such as referring to a document in the event is visualized.

In a system described in Japanese Unexamined Patent Application Publication No. 2008-210346, an image-log registration unit is configured to generate, from image-processing request information, image-processing history information, such as a processing date and time, and a history image representing an image subjected to image processing and register the image-processing history information and the history image in an image-log manager along with attribute information of a document. A search terminal is used to search the image-log manager for a record by using an item in image-processing history information or attribute information as a search criterion. The history image of a record satisfying the search criterion is retrieved as a search result (refer to paragraphs 0043 to 0045, in particular).

### Summary

In some cases, it is convenient to be able to search for a piece of data by using a manipulation performed by a user on the piece of data as a search criterion. For example, a user may want to search for a document to which the user attached a sticker in the top right-hand corner of a page in an application screen.

Unfortunately, a common user interface for entering a search criterion is either to enter a search criterion by using a text or a logical expression or to select a search criterion from a list of alternatives.

It is not easy for a user to enter a search criterion to search for a manipulation either by entering a text or a logical expression or by selecting a criterion from a list.

Accordingly, it is an object of the present disclosure to provide an apparatus and a method for allowing a user to enter a search criterion to search for a manipulation more easily than inputting a search criterion by entering a text or a logical expression or by selecting a criterion from a list.

According to a first aspect of the present disclosure, there is provided an information processing apparatus including a processor configured to: execute a first acceptance process of accepting one or more manipulations each performed on a corresponding piece of data in a manipulation screen; execute a recording process of recording each of the one or more manipulations in association with the corresponding piece of data; execute a second acceptance process of accepting a search manipulation in a search screen configured to imitate the manipulation screen; and execute a presentation process of presenting at least one piece of data associated with the search manipulation accepted in the second acceptance process.

According to a second aspect of the present disclosure, the processor in the information processing apparatus according to the first aspect is configured to: accept, in the first acceptance process, entry of the one or more manipulations each performed on a portion of the corresponding piece of data presented in the manipulation screen; further record, in the recording process, information for specifying the portion in association with each of the one or more manipulations and the corresponding piece of data; identify, in the second acceptance process, a portion of a piece of data as a target portion, the portion being subjected to the search manipulation that has been accepted; and provide, in the presentation process, a search result for presenting the target portion of the at least one piece of data associated with the search manipulation accepted in the second acceptance process.

According to a third aspect of the present disclosure, the processor in the information processing apparatus according to the first aspect or the second aspect is configured to: accept an instruction indicating whether a portion of a piece of data is subjected to a manipulation or whether an entire piece of data is subjected to a manipulation; when an instruction indicating that a portion of a piece of data is subjected to a manipulation has been accepted, present a first search screen imitating a manipulation screen for accepting a manipulation of content of a piece of data in the second acceptance process and accept a search manipulation in the first search screen; and when an instruction indicating that an entire piece of data is subjected to a manipulation has been accepted, present a second search screen imitating a manipulation screen for accepting a manipulation of the entire piece of data in the second acceptance process and accept a search manipulation in the second search screen.

According to a fourth aspect of the present disclosure, the processor in the information processing apparatus according to any one of the first aspect to the third aspect is configured to: in the presentation process, refer to similarity-relation information that specifies a similarity relation between manipulations and present the at least one piece of data associated with the search manipulation accepted in the second acceptance process and at least one piece of data associated with a manipulation determined based on the similarity-relation information to be similar to the search manipulation accepted in the second acceptance process.

According to a fifth aspect of the present disclosure, the processor in the information processing apparatus according to any one of the first aspect to the fourth aspect is configured to: after executing the presentation process, accept, in the search screen, a manipulation of changing a parameter for the search manipulation accepted in the second acceptance process and present at least one piece of data associated with the search manipulation having the parameter obtained after the manipulation of changing.

According to a sixth aspect of the present disclosure, the processor in the information processing apparatus according to any one of the first aspect to the fifth aspect is configured to: accept selection of an application; and accept, in the second acceptance process, the search manipulation in the search screen imitating the manipulation screen corresponding to the selected application.

According to a seventh aspect of the present disclosure, the search screen of the information processing apparatus according to any one of the first aspect to the sixth aspect is generated based on setting information for a user, the setting information being used to generate the manipulation screen for a user who has performed the search manipulation in the second acceptance process.

According to an eighth aspect of the present disclosure, the processor in the information processing apparatus according to any one of the first aspect to the seventh aspect is configured to: present a narrowing-down screen and accept entry of a narrowing-down criterion into the narrowing-down screen when the number of the at least one piece of data associated with the search manipulation accepted in the second acceptance process exceeds a threshold; and present a piece of data satisfying the narrowing-down criterion that is entered into the narrowing-down screen, the piece of data being selected from the at least one piece of data associated with the search manipulation accepted in the second acceptance process.

According to a ninth aspect of the present disclosure, there is provided a program causing a computer to execute a process, the process including: executing a first acceptance process of accepting one or more manipulations each performed on a corresponding piece of data in a manipulation screen; executing a recording process of recording each of the one or more manipulations in association with the corresponding piece of data; executing a second acceptance process of accepting a search manipulation in a search screen configured to imitate the manipulation screen; and executing a presentation process of presenting at least one piece of data associated with the search manipulation accepted in the second acceptance process.

According to a tenth aspect of the present disclosure, there is provided an information processing method including: executing a first acceptance process of accepting one or more manipulations each performed on a corresponding piece of data in a manipulation screen; executing a recording process of recording each of the one or more manipulations in association with the corresponding piece of data; executing a second acceptance process of accepting a search manipulation in a search screen configured to imitate the manipulation screen; and executing a presentation process of presenting at least one piece of data associated with the search manipulation accepted in the second acceptance process.

According to the first aspect, the ninth aspect, and the tenth aspect of the present disclosure, a user is allowed to enter a search criterion to search for a manipulation more easily than inputting a search criterion by entering a text or a logical expression or by selecting a criterion from a list.

According to the second aspect of the present disclosure, when a search is performed for a manipulation of a portion of a piece of data as a search criterion, the target portion subjected to the search manipulation can be presented in an obtained search result.

According to the third aspect of the present disclosure, a manipulation of a portion of a piece of data and a manipulation of an entire piece of data can be accepted in different search screens.

According to the fourth aspect of the present disclosure, not only at least one piece of data associated with a search manipulation entered in the search screen can be presented but also at least one piece of data associated with a manipulation similar to the search manipulation can be presented.

According to the fifth aspect of the present disclosure, the search criterion can be changed by a manipulation in the search screen.

According to the sixth aspect of the present disclosure, entry of a search criterion for a manipulation of a piece of data can be accepted for each of the multiple applications by using a search screen imitating a manipulation screen corresponding to the application.

According to the seventh aspect of the present disclosure, the search screen can be provided based on the setting information used to generate the manipulation screen.

According to the eighth aspect of the present disclosure, a narrowing-down operation can be performed if too many pieces of data are associated with the search manipulation accepted in the second acceptance process.

### Brief Description of the Drawings

An exemplary embodiment of the present disclosure will be described in detail based on the following figures, wherein:
Fig. 1 is a diagram depicting an example of a functional configuration of an information processing apparatus according to the exemplary embodiment;
Fig. 2 is an illustration depicting an example of a manipulation screen provided by a document processing user interface (UI);
Fig. 3 is an illustration depicting an example of a manipulation history;
Fig. 4 is an illustration depicting an example of procedures performed by a manipulation recorder;
Fig. 5 is an illustration depicting an example of a search screen provided by a search UI;
Fig. 6 is an illustration depicting an example of a search-result display screen;
Fig. 7 is an illustration depicting an example of a search screen and a narrowing-down screen;
Fig. 8 is an illustration depicting an example of a manipulation of page rotation in the search screen;
Fig. 9 is an illustration depicting another example of a search screen provided by the search UI;
Fig. 10 is an illustration depicting an example of a screen for accepting a criterion for a manipulation on a mail client;
Fig. 11 is an illustration depicting an example of a manipulation of file movement in the search screen;
Fig. 12 is an illustration depicting an example of a search screen for accepting a criterion for a manipulation on a communication support tool and a display screen for a search result satisfying the criterion;
Fig. 13 is an illustration depicting an example of procedures performed by the search UI and a search unit;
Fig. 14 is an illustration depicting an example of a screen for accepting selection of a search category;
Fig. 15 is an illustration depicting an example of procedures performed by a search UI associated with multiple applications; and
Fig. 16 is a diagram illustrating a hardware configuration of a computer.

### Detailed Description

Hereinafter, an embodiment of the present disclosure (referred to as an "exemplary embodiment" below) will be described with reference to the drawings.

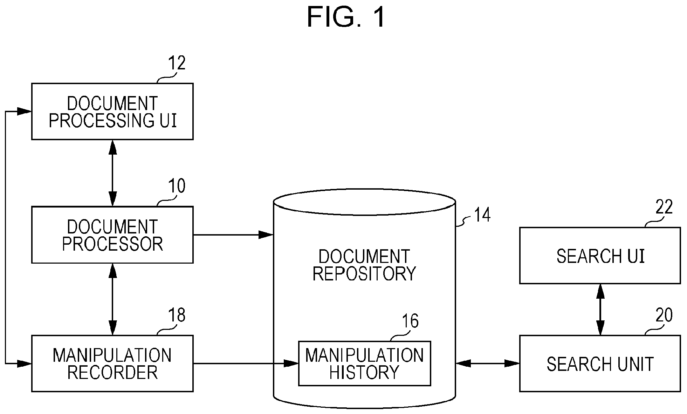

Fig. 1 illustrates a functional configuration of an information processing apparatus including a search function according to the present exemplary embodiment. The information processing apparatus illustrated in Fig. 1 is an apparatus configured to manage a document file (referred to as a "document" below). The information processing apparatus is based on document management software providing functions of processing a document, such as viewing, editing, and annotating. Examples of such document management software include DocuWorks (registered trademark), which is provided by the applicant, and Adobe Acrobat (registered trademark), which is provided by Adobe Inc. Examples of annotating a document include marking by using a highlighter, attaching a sticker, adding a stamp image, and adding a note by using a text font or by handwriting. The information processing apparatus according to the present exemplary embodiment is provided by causing a computer such as a personal computer (PC) or a server to execute software obtained by adding a search function according to the present exemplary embodiment to document management software of this kind. The information processing apparatus may be a system for an individual based on a machine such as a PC or be formed as a server for providing a remote user with a service of document management and search. A document is an example of a piece of data subjected to a manipulation.

The information processing apparatus providing a document management service is presented only by way of illustration. The search function according to the present exemplary embodiment may also widely be applied to data in general managed by software other than such document management software.

The information processing apparatus illustrated in Fig. 1 includes, as a functional module, a document processor 10, a document processing user interface (UI) 12, a document repository 14, a manipulation recorder 18, a search unit 20, and a search UI 22.

The document processor 10 is configured to perform a process for a document stored in the document repository 14 in response to a user manipulation.

Processes to be performed by the document processor 10 are generally classified as a process for the content of a document or a process for the entire document.

A process for the content of a document is namely a process for a portion of the document. Each page in a document represents a "portion" of the document. Examples of a process for the content of a document include adding an annotation to a page, editing the content of a page, changing the order of pages, and deleting a page. If a document is a table, a specific cell in the table and a group of cells in the table that are centered around the specific cell and that can be displayed in a single screen may also be referred to as a portion of the document.

A process for the entire document is namely a process for a document as a unit. Examples of this kind of process include transmitting a document attached to an email, moving a document to a specified folder, copying a document, combining multiple documents into a single document, and dividing a single document into two or more documents.

In addition, when an external document is loaded onto the information processing apparatus and saved to the document repository 14, the document processor 10 may optionally convert the external document into a format (such as Portable Document Format (PDF)) for handling by the information processing apparatus. An external document is a document generated by an application not installed into the information processing apparatus (such as a spreadsheet application).

The document processing UI 12 is configured to perform processing for a user interface to the document processor 10. The document processing UI 12 is configured to provide a manipulation screen based on a graphical user interface (GUI) for accepting a manipulation of a document.

For example, the document processing UI 12 presents the content of a page in a document and accepts a manipulation of the content of the document from a user. The document processing UI 12 accepts both a manipulation of the content of a document and a manipulation of the entire document from a user.

A manipulation of the content of a document is performed by a user to instruct the information processing apparatus to perform one of the above processes for the content of a document. This manipulation may be referred to as a manipulation performed on a portion (such as a page) of a document. In addition, since this manipulation is accepted in a screen that presents the content of a document, a document file needs to be opened to accept this manipulation. Accordingly, this manipulation may also be referred to as a manipulation to be performed while a document is open.

A manipulation of the entire document is performed by a user to instruct the information processing apparatus to perform one of the above processes for the entire document. This manipulation is a manipulation performed on the entire document. In addition, a manipulation of this type may also be referred to as a manipulation to be performed without opening a document.

In an example, the document processing UI 12 has two kinds of manipulation screens, one kind of screen being a manipulation screen for accepting a manipulation of the content of a document, the other kind of screen being a manipulation screen for accepting a manipulation of the entire document. The former is referred to as a first manipulation screen, and the latter is referred to as a second manipulation screen.

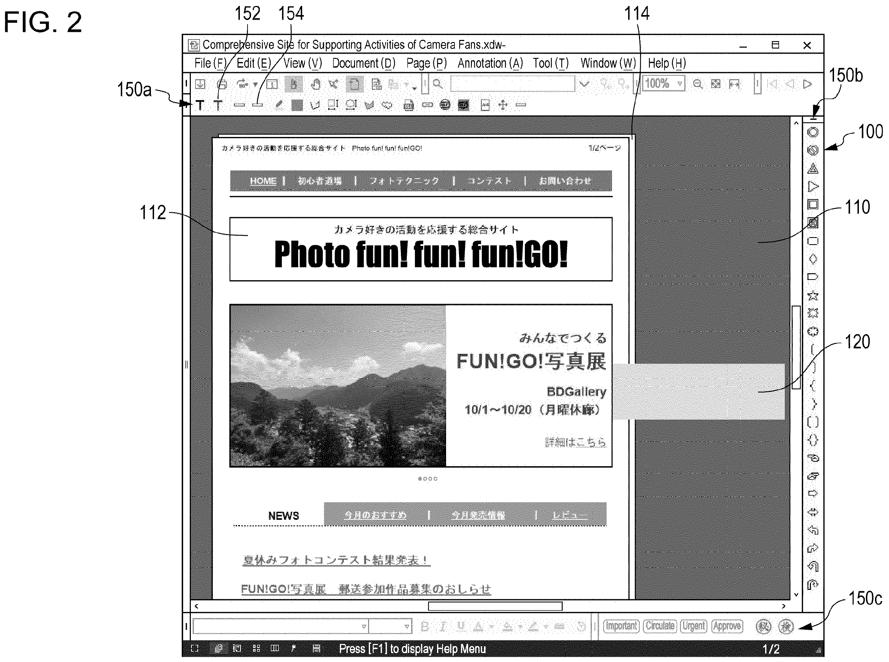

Fig. 2 depicts an example of the first manipulation screen, which is a manipulation screen provided by the document processing UI 12 to accept a manipulation of the content of a document.

A main window 110 in a first manipulation screen 100 illustrated in Fig. 2 presents an image of a page 112 in a document. In the illustrated example, the document contains two pages, and an image 114 representing another page is presented behind the page 112. The page 112, which is the first page, is active, and the document processing UI 12 accepts a manipulation, such as annotating, performed by a user on the page 112. When the user clicks on the image 114 representing the page at the back or presses a predetermined turn-of-page button, the second page becomes active, and an image representing the presence of the first page is presented behind the image of the second page.

Tool bars 150a, 150b, and 150c (collectively referred to as a tool bar 150) are disposed at the top, on the right-hand side, and at the bottom, respectively, of the main window 110. Buttons representing various manipulations of a document are arranged in the tool bar 150.

For example, a button 152 having a character "T" located in the tool bar 150a is configured to provide an instruction for a manipulation of adding a text annotation to the page 112 presented in the main window 110. For example, clicking on the button 152 with a mouse allows a user to enter a text annotation, and the user specifies, with a mouse, a position at which the annotation is to be placed in the page 112 and enters a text. In response to the text entry, the document processor 10 adds the text, which is entered, to the piece of data representing the document as a text annotation associated with the position in the page 112.

A button 154 in the tool bar 150a is used to provide an instruction for a manipulation of attaching a sticker. If the user presses the button 154 by an operation such as a mouse operation, a sticker 120 appears on the right side of the page 112, which is active. The user moves the sticker 120 wherever the user wants along the right side by using a device such as a mouse.

In addition, buttons to add various figures to the page 112 are arranged in the tool bar 150b, and buttons to add various stamps to the page 112 are arranged in the tool bar 150c. Figures and stamps added to the page 112 by using these buttons are added to the piece of data representing the document as annotation data added to the page 112.

The first manipulation screen 100 includes various graphic user interface (GUI) components for accepting a manipulation from the user in addition to the buttons in the tool bar 150. Examples of a GUI component include a menu bar, a drop-down list, and a contextual menu.

The second manipulation screen, that is, a screen for accepting a manipulation of the entire document (in other words, a manipulation of a document as a unit) is, for example, a screen in which icons each representing a document in one or more folders under management are arranged in a list. The user selects a target document for manipulation in the screen and performs a manipulation for providing an instruction for processing the target document as a unit, such as copying or combining. A search screen having an appearance similar to the second manipulation screen will be illustrated below.

The document repository 14 is a functional module configured to store a document managed by the information processing apparatus. By way of non-limiting illustration, the document repository 14 may be implemented as a folder managed by the file system of a computer on which the information processing apparatus is based.

The document repository 14 is configured to store a manipulation history 16. The manipulation history 16 includes information regarding a history of manipulations performed on each document. A manipulation of a document is performed by using the document processor 10.

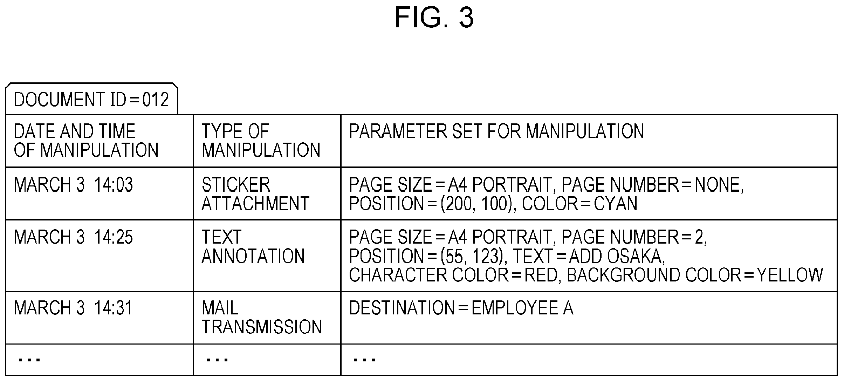

Fig. 3 represents an example of data regarding a document in the manipulation history 16. As depicted in Fig. 3, the manipulation history 16 includes a date and time of manipulation, a type of manipulation, and a parameter set for each manipulation. A date and time of manipulation provides a date and time when the manipulation was performed. A type of manipulation provides the type of the manipulation. For example, a type of manipulation is associated with a button that the user pressed in the tool bar 150. A parameter set provides information specifying details of the manipulation.

For example, a parameter set for a manipulation whose type of manipulation is "sticker attachment" includes a page size, a page number, a position, and a color. A page size is the size of the page to which a sticker associated with the manipulation is attached. A page number is the number of the page to which the sticker is attached in the document. A position provides coordinates representing the position in the page to which the sticker is attached. A color is the color of the sticker. Further, a parameter set for a manipulation whose type of manipulation is "text annotation" includes a page size, a page number, a position, a text, a character color, and a background color. A page size is the size of the page to which the text annotation is added. A page number is the number of the page to which the text annotation is added. A position provides coordinates representing the position of the text annotation in the page. A text is a character string that forms the text annotation. A character color is the color of the characters in the text annotation. A background color is the color of the background behind the text annotation. Further, the type of manipulation "mail transmission" is a type of manipulation in which the document is attached to an email and transmitted. The parameter set for this type of manipulation includes, for example, a destination of the email.

The position of the sticker, which is included in the parameter set for the sticker attachment, is represented by the coordinates in the page as described above by way of non-limiting illustration. In another example, the position of a sticker may be represented by a combination of information specifying a side to which the sticker is attached and a distance from the reference point of the side (for example, the top end of the right side) to the sticker. The side to which the sticker is attached is selected from the four sides of a page, which are the top side, the bottom side, the right side, and the left side.

Information regarding a document in the manipulation history 16 may be included in the file of the document or included in a file other than the file of the document (for example, a database file including data regarding each document in the manipulation history 16). The manipulation history 16 included in the file of the document may be included as a portion of data representing the content (including an annotation) of the document.

Referring back to Fig. 1, the manipulation recorder 18 is configured to acquire information regarding a manipulation performed by the user on the document from the document processor 10 or the document processing UI 12 and record the information regarding the manipulation in the manipulation history 16.

The search unit 20 is configured to search for a document stored in the document repository 14. The search UI 22 is configured to perform processing for a user interface to the search unit 20. Examples of the processing include providing a screen for entering a search criterion.

The search unit 20 has a function of performing a search based on a search criterion, which is a manipulation performed by the user on a document. The search UI 22 is configured to accept a manipulation as a search criterion in a search screen configured to imitate a manipulation screen provided by the document processing UI 12. Such a search screen is also referred to as an "imitating manipulation screen" below. The imitating manipulation screen has GUI components identical or similar to the components in the manipulation screen. The user is able to enter a manipulation of a document into the imitating manipulation screen by using an action identical or similar to an action performed in the manipulation screen. The search unit 20 is configured to perform a document search based on details of the manipulation that is entered by the user into the imitating manipulation screen as a search criterion. A manipulation that is entered into the imitating manipulation screen is exclusively used to define a search criterion, and the manipulation is not performed on the actual document.

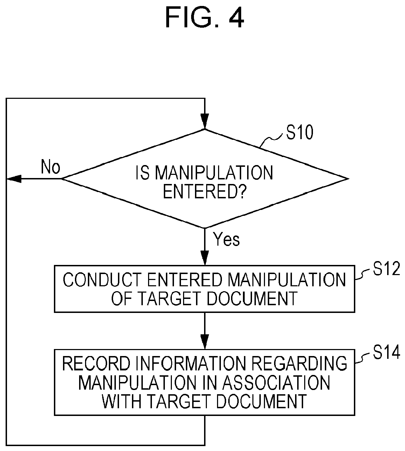

Next, referring to Fig. 4, description will be given with regard to an example of procedures executed by the information processing apparatus when the user performs a manipulation of a document by using the document processing UI 12.

While the first manipulation screen or the second manipulation screen is presented, the document processing UI 12 waits for the user to enter a manipulation into either of the manipulation screens (step S10). In response to the entry of a manipulation of a document from a user, an affirmative determination is made in step S10. In this case, the document processor 10 conducts a process corresponding to the manipulation of the document (step S12). In addition, the manipulation recorder 18 records information regarding details of the manipulation, such as the date and time of the manipulation, the type of the manipulation, and the parameter set, in the manipulation history 16 (step S14).

Description will be given below with regard to an example of a search based on the imitating manipulation screen according to the present exemplary embodiment.

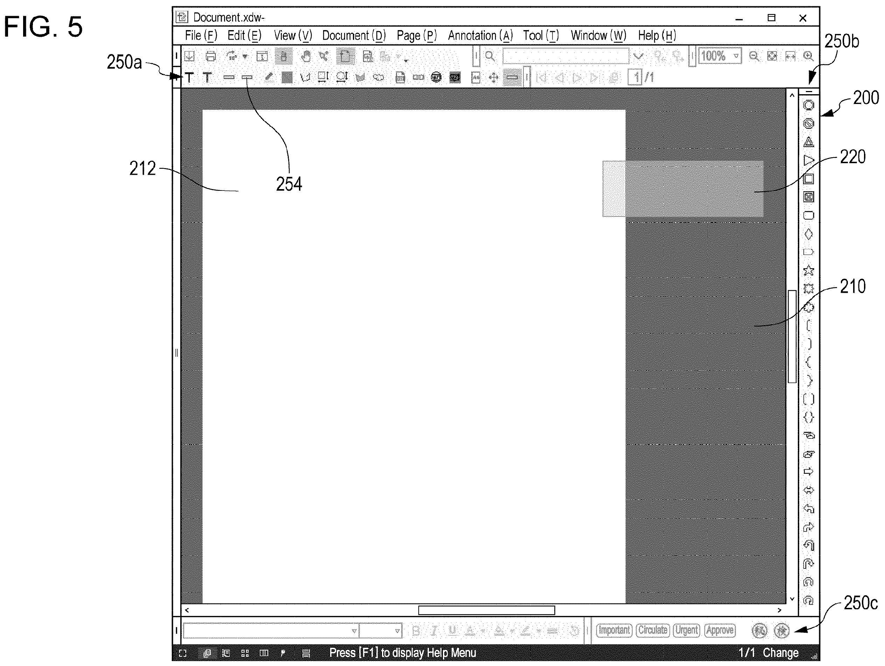

Fig. 5 depicts a first imitating manipulation screen 200, which is an example of the imitating manipulation screen. The first imitating manipulation screen 200 is a search screen configured to imitate the first manipulation screen 100 illustrated in Fig. 2 and is configured to accept entry of a manipulation similar to a manipulation in the first manipulation screen 100. The first imitating manipulation screen 200 is used to enter a manipulation of the content of a document as a search criterion.

The first imitating manipulation screen 200 presents, in a main window 210, a page 212 of a dummy document on which a manipulation is performed. A dummy document is formed by, for example, a predetermined number of blank pages.

Tool bars 250a, 250b, and 250c (collectively referred to as a tool bar 250 below) are disposed around the main window 210. The tool bars 250a, 250b, and 250c correspond to the tool bars 150a, 150b, and 150c, respectively, in the first manipulation screen 100. Buttons arranged in the tool bar 250 have appearances similar to the appearances of the buttons in the tool bar 150 and correspond to similar manipulations. For example, the user attaches a sticker 220 to the right side of the page 212 by pressing a button 254 in the tool bar 250a and further moves the sticker 220 to wherever the user wants along the right side by an operation such as a mouse operation.

The first imitating manipulation screen 200 includes various GUI components in addition to the tool bar 250, which is illustrated. Examples of a GUI component include a menu bar, a drop-down list, and a contextual menu included in the first manipulation screen 100. Whereas entry into a GUI component in the first manipulation screen 100 is used for a manipulation of a document by the document processor 10, entry into a GUI component in the first imitating manipulation screen 200 is used as a search criterion by the search unit 20.

The user enters, into the first imitating manipulation screen 200, a manipulation identical to a manipulation performed in the past on a search target, which is a document to be searched for. In the example in Fig. 5, the user remembers that the search target has the A4 portrait size and that the user attached a sticker to a position around 10 cm from the top end of the right side of a page of the document. Based on the memory, the user causes the first imitating manipulation screen 200 to present the page 212 of the A4 portrait size and performs a manipulation of attaching the sticker 220 to the same position of the page 212. The search UI 22 detects that the page subjected to a manipulation has the A4 portrait size, that the type of manipulation is sticker attachment, and that the position of the attached sticker is represented, for example, by coordinates (201, 102). Then, the search UI 22 passes a search criterion "page size = A4 portrait, type of manipulation = sticker attachment, position = (201, 102)" to the search unit 20. The x coordinate "201" represents an example of a position near the right side of the page in a coordinate system in which the origin is located at the top left corner of the page of the A4 portrait size, the right direction is the positive direction of the x coordinate, the downward direction is the positive direction of the y coordinate, and coordinate values are represented in mm. The search unit 20 searches the manipulation history 16 in the document repository 14 by using this search criterion. For example, the search unit 20 searches the manipulation history 16 for a document whose page size is the A4 portrait, that was subjected to a manipulation of the type "sticker attachment", and to which a sticker is attached at a position close to the coordinates (200, 100). Records in the search result are arranged, for example, in order of closeness of the sticker position to the coordinates (200, 100). If the user specifies the color of a sticker in a manipulation of sticker attachment performed in the first imitating manipulation screen 200, the color of a sticker also affects the determination of the order of the records in the search result. In general, the order of the records in the search result is determined based on the overall rating of the closeness (for example, a distance) between the value of each item of the search criterion and the value of the same item in the history of manipulation of a document.

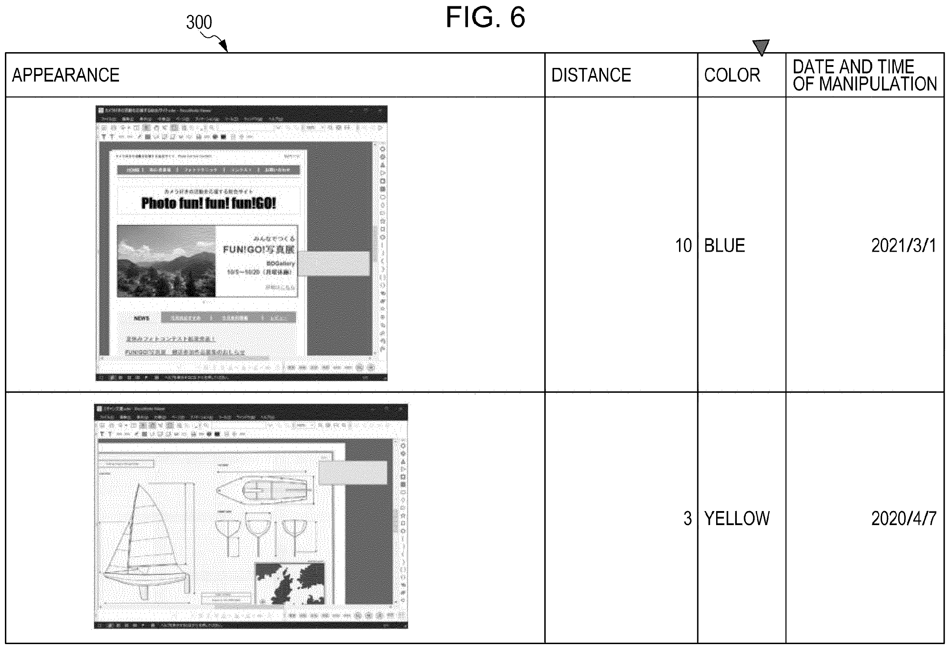

Fig. 6 depicts an example of a search-result display screen 300. This is an example of a screen presenting a search result in the case where the manipulation of sticker attachment, which is illustrated in Fig. 5, is designated as the search criterion. In this example, the search result is presented in a table format. A row in the table provides information regarding a document in the search result, and the documents are arranged from the top in order of closeness. In this example, the information regarding a document in the search result includes items that are an appearance, a distance, a color, and a date and time of manipulation.

The appearance provides an image representing how a page satisfying the search criterion looks like, the page being contained in the document. Since a manipulation of sticker attachment is the search criterion in the illustrated example, images of pages to which a sticker is attached are presented. In this way, when a manipulation of the content of a document, that is, a manipulation of not the entire document but a portion of the document is entered as a search criterion, the search UI 22 presents, in a list of records in a search result, an image representing a portion (for example, a page) subjected to the manipulation, the portion being selected from a document included in the search result.

The distance provides the distance between the sticker position included in the search criterion and the sticker position in a document included in the search result. The color provides the color of the sticker attached to the page represented by the appearance. The date and time of manipulation provides the date and time when the manipulation of attaching the sticker was performed.

When an "open" operation, such as clicking, is performed on the appearance image of a document in the search-result display screen 300, the search UI 22 may instruct the document processing UI 12 to open the document and present the page represented by the appearance. In this case, the document processor 10 opens the document, and the document processing UI 12 displays a screen presenting the page in an active state.

In the search-result display screen 300, specifying an item allows the records in the search result to be sorted according to the value of the item. In the illustrated example, the color of a sticker is identified as the item of interest, and the records in the search result are arranged in order of closeness of the color of a sticker to the search criterion.

Further, when entering the search criterion, the user may specify a parameter of interest, and the search UI 22 may present the search-result display screen 300 displaying the records in the search result arranged in order of closeness of the parameter of interest.

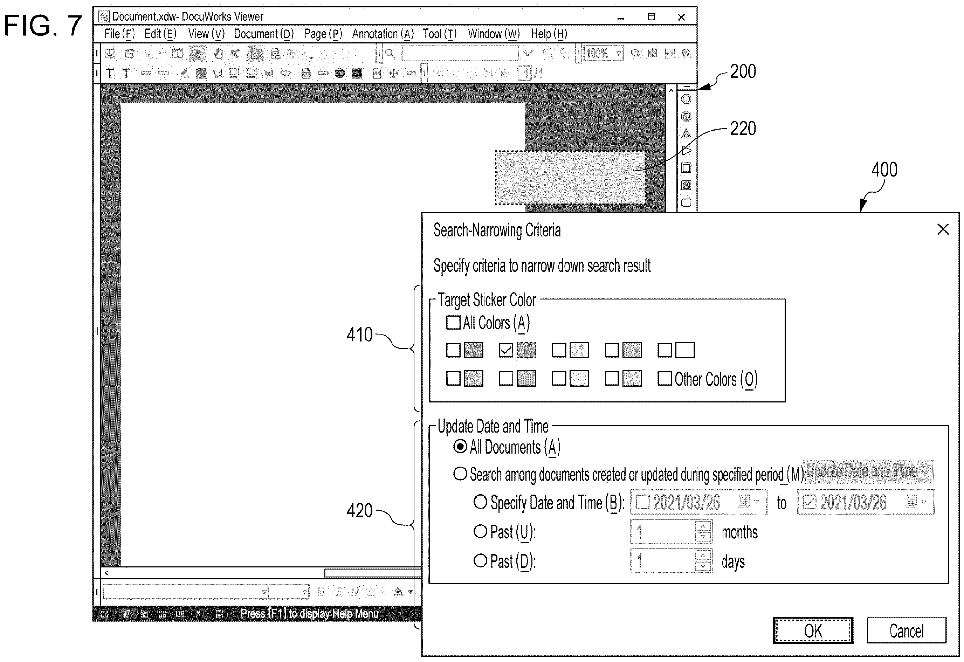

Further, the search UI 22 may accept a narrowing-down search with regard to an item in the search-result display screen 300. For example, if the user selects a narrowing-down search from a contextual menu for an item in the search-result display screen 300, the search UI 22 presents a UI screen for accepting entry of a narrowing-down criterion with regard to the item. For example, if the user specifies a narrowing-down search with regard to the color of a sticker, the search UI 22 presents a UI screen similar to a color-specifying box 410 in a narrowing-down screen 400 in Fig. 7, which will be described below, and accept the specification of the target color of a sticker.

After the user enters a manipulation of a document in a search screen (for example, the first imitating manipulation screen 200), the search UI 22 may present a narrowing-down screen for accepting an additional narrowing-down criterion to narrow down the search result.

Fig. 7 illustrates the narrowing-down screen 400. The narrowing-down screen 400, which is illustrated in Fig. 7, is an example of a narrowing-down screen presented when a manipulation of attaching the sticker 220 to the page 212 in the first imitating manipulation screen 200 is performed. The narrowing-down screen 400 includes the color-specifying box 410 and an update-date-and-time specifying box 420.

The color-specifying box 410 is a GUI component for accepting the specification of the color of a sticker to be searched for. In the illustrated example, the color-specifying box 410 includes a checkbox for indicating that all the colors are searched for and checkboxes for selecting individual colors as a color to be searched for. In this example, multiple colors can be selected as a color to be searched for. For example, if the color of the sticker 220 is also specified in the manipulation of sticker attachment in the first imitating manipulation screen 200, a check is entered in the checkbox of the specified color when the color-specifying box 410 is presented. If the user is not certain about the color of the sticker attached to a document to be searched for and needs to search for several colors, those possible colors are added to the search target in the color-specifying box 410. If the user does not remember the color of the sticker attached to a document to be searched for, the user may specify all the colors as a search target. The search unit 20 is configured to search for a document having a history of manipulation of attaching a sticker having the color specified as a search target in the color-specifying box 410.

The color-specifying box 410 is configured to accept the specification of the color of the attached sticker as an additional criterion with regard to the search criterion "sticker attachment", which is entered by using the first imitating manipulation screen 200. In this way, the narrowing-down screen 400 may include a GUI component for entering a criterion in addition to the search criterion with regard to the manipulation, which is entered by using the first imitating manipulation screen 200. Although the color-specifying box 410 for specifying the color of a sticker is illustrated in this example, the narrowing-down screen 400 may include a GUI component for entering an additional criterion for an attribute other than the color of a sticker with regard to the manipulation of sticker attachment.

Although the color-specifying box 410 is illustrated in this example, if a manipulation performed by using the first imitating manipulation screen 200 to enter a search criterion is different, a GUI component for entering one or more additional criteria with regard to the different manipulation is presented instead of the color-specifying box 410. For example, if a manipulation of entering a text annotation is performed in the first imitating manipulation screen 200, the narrowing-down screen 400 presents entry boxes such as an entry box for a character string, which is the content of the annotation, an entry box for the character color, and an entry box for the font. However, of the attributes such as the character string, the character color, and the font, an attribute already specified by the manipulation performed in the first imitating manipulation screen 200 for text annotation does not need a corresponding entry box to be presented in the narrowing-down screen 400.

The update-date-and-time specifying box 420 is a GUI component configured to accept the specification of a criterion with regard to the update date and time of a document to be searched for. First, the user selects one of the two alternatives in this box, one being to search among all the documents, the other being to search among documents created or updated during a certain period. When the user selects the latter, the user further specifies the certain period (for example, the beginning and the end).

A criterion with regard to the update date and time specified in the update-date-and-time specifying box 420 is a criterion with regard to an attribute of a document to be searched for and is not directly related to a search criterion entered by using the first imitating manipulation screen 200 with regard to a manipulation. In this way, the narrowing-down screen 400 may include a GUI component for entering one or more criteria not directly related to the search criterion with regard to a manipulation. Although the update-date-and-time specifying box 420 for specifying the criterion with regard to the update date and time of a document is illustrated in this example, the narrowing-down screen 400 may include a GUI component for entering a criterion for a document attribute other than the update date and time.

The search UI 22 may be configured to automatically present the narrowing-down screen 400 after the manipulation of a document is entered in the first imitating manipulation screen 200 or present the narrowing-down screen 400 in response to entry of an instruction from the user to present the screen.

Further, the narrowing-down screen 400 may be presented after the search-result display screen 300 corresponding to the entered manipulation is presented. Specifically, the search UI 22 may be configured to present the narrowing-down screen 400 either automatically after the search-result display screen 300 is presented or in response to entry of an instruction from the user to present the screen.

Further, the search UI 22 may be configured to present the narrowing-down screen 400 when the number of records in a search result obtained by the search unit 20 exceeds a predetermined threshold.

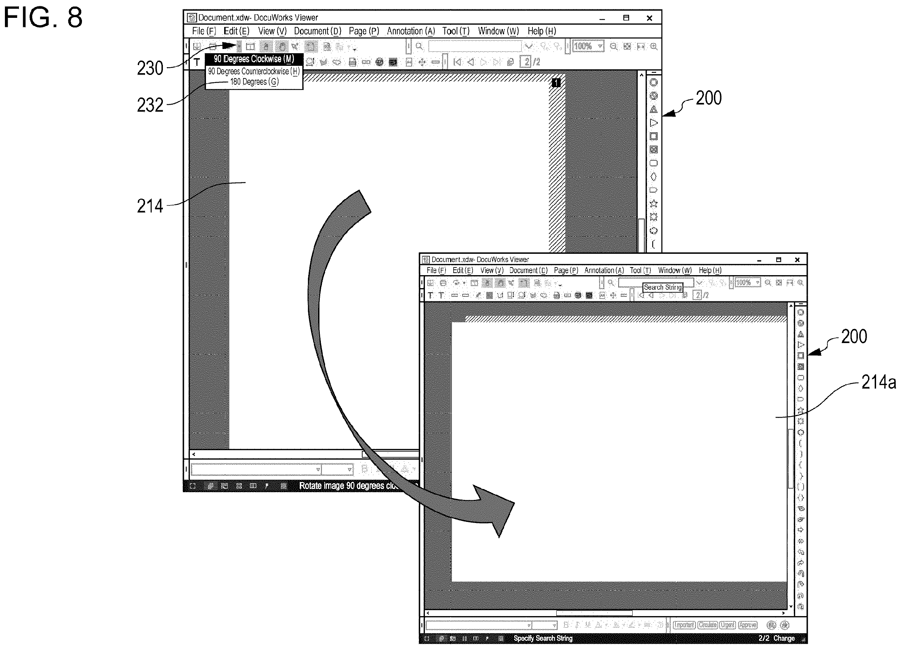

Next, referring to Fig. 8, another example of entering a search criterion by using the first imitating manipulation screen 200 will be described. In the example in Fig. 8, the user remembers rotating the second page of a target document counterclockwise by 90 degrees and enters the manipulation in the first imitating manipulation screen 200. Namely, the user performs a manipulation of turning over a page of the document in the main window 210 to present the second page 214 and then presses a page-rotation button 230. In response to this manipulation, a drop-down list 232 containing selectable combinations of rotation direction and angle is presented. The user performs a manipulation of selecting the rotation direction and angle that the user wants to use in the drop-down list 232. In the illustrated example, it is assumed that a manipulation of a counterclockwise rotation of 90 degrees is performed. In response to this manipulation, the search UI 22 presents a second page 214a rotated counterclockwise by 90 degrees in the first imitating manipulation screen 200 and passes a search criterion "type of manipulation = page rotation, page number = 2, rotation direction = counterclockwise, rotation angle = 90 degrees" to the search unit 20.

The search unit 20 searches for a document having a history of manipulation matching this search criterion. In this way, a document subjected to a manipulation of identical or similar page rotation is searched for. The order of documents in the search result is determined based on, for example, the closeness of the page number of a rotated page, whether the rotation direction is the same, and the closeness of the rotation angle.

Since a manipulation of turning over a page is performed in the example in Fig. 8, the search UI 22 adds information regarding the page number to the search criterion. In contrast to this example, since no manipulation of turning over a page is performed in the example in Fig. 5, which is described above, the search criterion does not contain a page number. When a search criterion contains a page number, the search by the search unit 20 is narrowed down by the page number. Namely, the search unit 20 searches for a document having a page whose page number is identical or similar to the page number and that was subjected to a manipulation of the type of manipulation included in the search criterion. The page-number range determined to be similar may be set by the user in advance. When a search criterion does not contain a page number, the search unit 20 searches for a document having a page subjected to a manipulation of the type of manipulation included in the search criterion regardless of a page number.

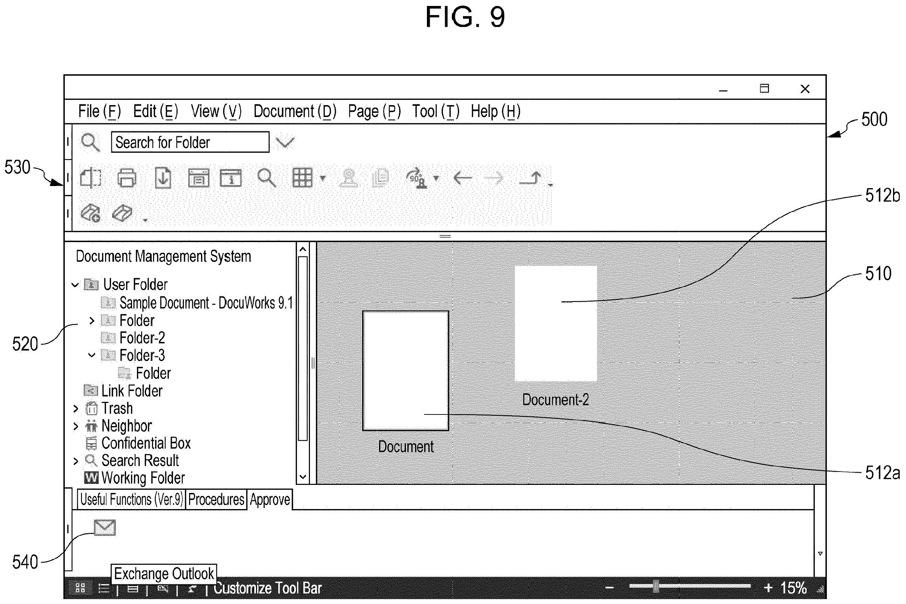

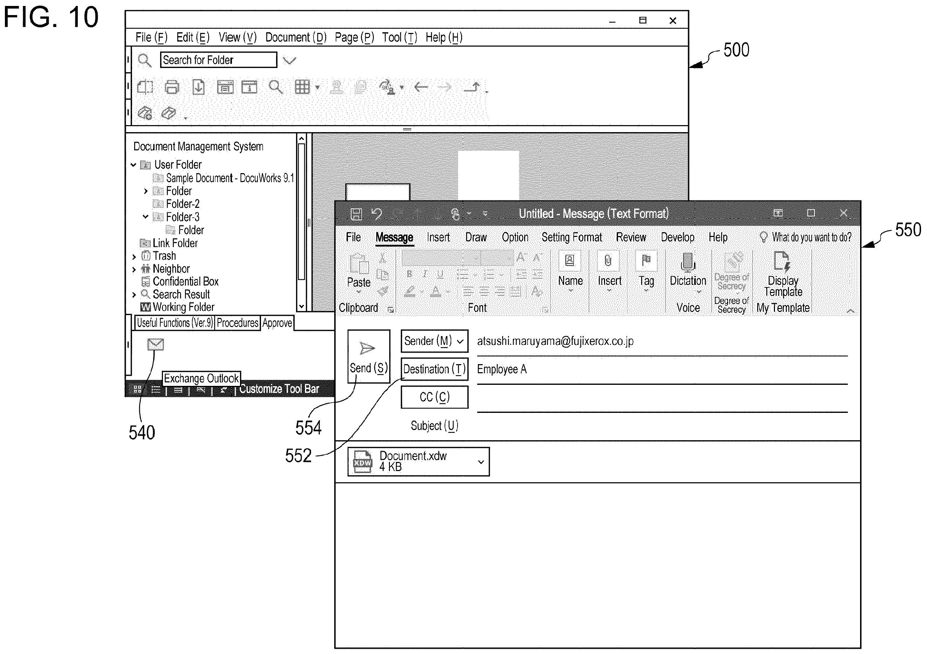

Next, referring to Figs. 9 and 10, examples of entering a search criterion by using a second imitating manipulation screen 500 will be described. The second imitating manipulation screen 500 is configured to imitate the second manipulation screen for accepting a manipulation of the entire document, that is, a manipulation of a document as a unit. The second imitating manipulation screen 500 is used to accept a manipulation of a document as a unit as a search criterion.

The second imitating manipulation screen 500 illustrated in Fig. 9 includes a main window 510 configured to present icons 512a and 512b of documents (collectively referred to as an icon 512 when it is unnecessary to refer to an individual icon). The icon 512 of a document may present a thumbnail image of a representative page of the document (for example, the top page or a page specified by the user). Document icons retained in a virtual workspace used for a job performed by using the information processing apparatus are presented in the main window of the second manipulation screen, which corresponds to the second imitating manipulation screen 500. These icons may freely be arranged in the main window, and the user is able to place icons in a meaningful arrangement, such as placing icons of closely related documents in positions close to each other. In contrast, the icons 512a and 512b presented in the main window 510 in the second imitating manipulation screen 500 are dummy icons used as a target to be subjected to a manipulation as a search criterion.

A folder display region 520 is configured to present a tree structure of folders under management of the information processing apparatus or a dummy folder-tree structure.

A tool bar 530 includes buttons for entering manipulations identical to manipulations entered by using the buttons for manipulation entry in the tool bar in the corresponding second manipulation screen. A button 540 for calling a mail client is presented under the folder display region 520.

When the user wants to search for a document attached to an email and sent to Employee A, the user causes the search UI 22 to present the second imitating manipulation screen 500 and presses the button 540. In response to this manipulation, the search UI 22 presents an imitating mailer screen 550 as depicted in Fig. 10. The imitating mailer screen 550 is configured to imitate a manipulation screen of a mail client and used to accept a manipulation with regard to mail transmission as a search criterion. The user enters Employee A as a destination in a destination box 552 in the imitating mailer screen 550. In an example, the destination is entered by entering a character string representing the email address of Employee A. In another example, the search UI 22 may refer to a destination list of a mail client installed into a computer on which the information processing apparatus is based. The destination list is stored in the computer as setting information unique to the user who performs manipulations and used to generate a manipulation screen having the destination box of the mail client. In this example, the search UI 22 selects a destination to be entered into the destination box 552 from the destination list. Then, when the user presses a send button 554, the search UI 22 enters a search criterion "type of manipulation = mail transmission, destination = Employee A" into the search unit 20. In response to the entry, the search unit 20 searches the manipulation history 16 for one or more documents sent to Employee A by mail transmission and presents matching documents.

Although Fig. 10 illustrates an example in which the destination is entered as a parameter for mail transmission, the search UI 22 is configured to accept, as a search criterion, other parameters, such as a carbon-copy (cc) destination and a subject, aside from the destination.

It is possible to accept, as a search criterion, a manipulation of a document as a unit other than the above mail transmission in the second imitating manipulation screen 500. Examples of such a manipulation include combining, dividing, moving, and copying.

For example, a manipulation of moving the icon 512a onto the other icon 512b in the main window 510 by a drag and drop operation indicates combining the two documents. When this manipulation is performed, the search UI 22 passes a search criterion "type of manipulation = combining" to the search unit 20. In addition, if a manipulation of dividing a document is performed by using a component such as a contextual menu for the icon 512a in the main window 510 or a button in the tool bar 530, the search UI 22 passes a search criterion "type of manipulation = dividing" to the search unit 20.

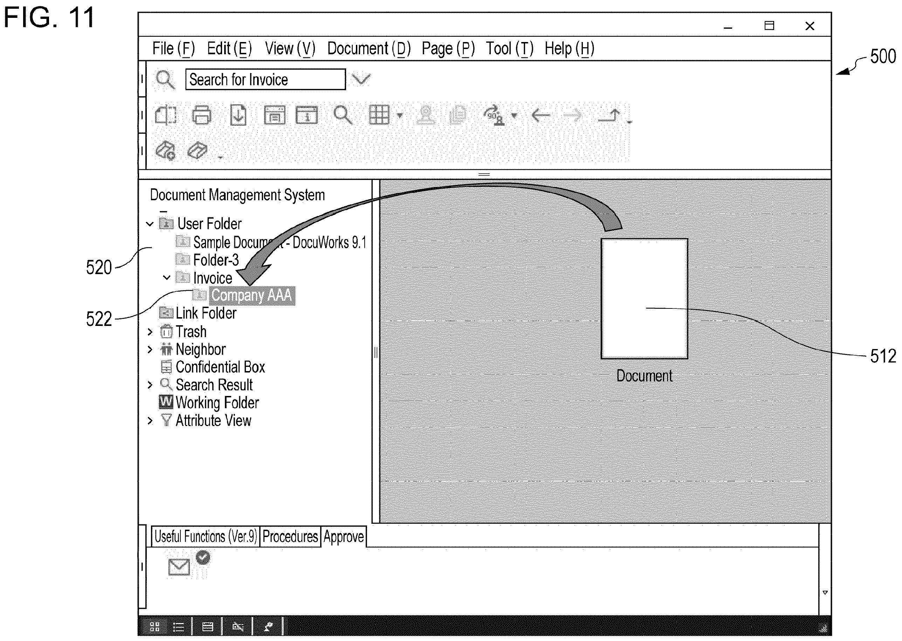

In the example depicted in Fig. 11, the user drags the icon 512 of a document in the main window 510, which represents a workspace, by using a mouse and drops the icon 512 onto a specific folder 522 (named "Company AAA") in the folder display region 520. This manipulation is to move a document corresponding to the icon 512 in the workspace to the folder 522 in a folder-tree structure under management of the information processing apparatus. If the user remembers having moved a document to be searched for to the folder "Company AAA", the user performs this manipulation in the second imitating manipulation screen 500.

When this manipulation is performed, the search UI 22 passes a search criterion "type of manipulation = moving, destination = Company AAA" to the search unit 20. In response to this operation, the search unit 20 searches the document repository 14 for one or more documents having a history of manipulation of moving to the folder "Company AAA" .

In the example in Fig. 11, the folder display region 520 is configured to present a folder-tree structure managed by the information processing apparatus. In this case, the position of the destination folder is specified in the folder-tree structure. In other words, the parameter for the destination represents a path name of the folder. However, in some cases, the user remembers the name of the destination folder but is not certain about the location of the folder in the folder-tree structure. In such a case, for example, if the range of similarity search is set to include a folder having an identical name or a similar name, the search unit 20 is to search for a document having a history of moving to a folder having a name identical or similar to the folder name set as a parameter.

In contrast, if the tree structure presented in the folder display region 520 is a dummy tree structure, the tree structure does not include the destination folder that the user remembers. In this case, the user changes the name of one of the folders in the tree structure to the name of the destination folder and drags and drops the icon 512 in the main window 510 onto the folder. In response to this manipulation, the search UI 22 passes a search criterion "type of manipulation = moving, destination = Company AAA" to the search unit 20. In this case, the tree structure in the folder display region 520 does not usually coincide with the actual folder-tree structure managed by the information processing apparatus. Thus, the destination parameter is used not to specify the path name of the destination folder but to specify the name of the folder. The search unit 20 searches for a document having a history of moving to a folder having the name of the folder.

Performing a manipulation such as pressing and holding down a control key during a drag and drop operation of the icon 512 allows the user to enter a manipulation of copying instead of moving. When this manipulation is performed, the search UI 22 passes a search criterion "type of manipulation = copying, destination = Company AAA" to the search unit 20.

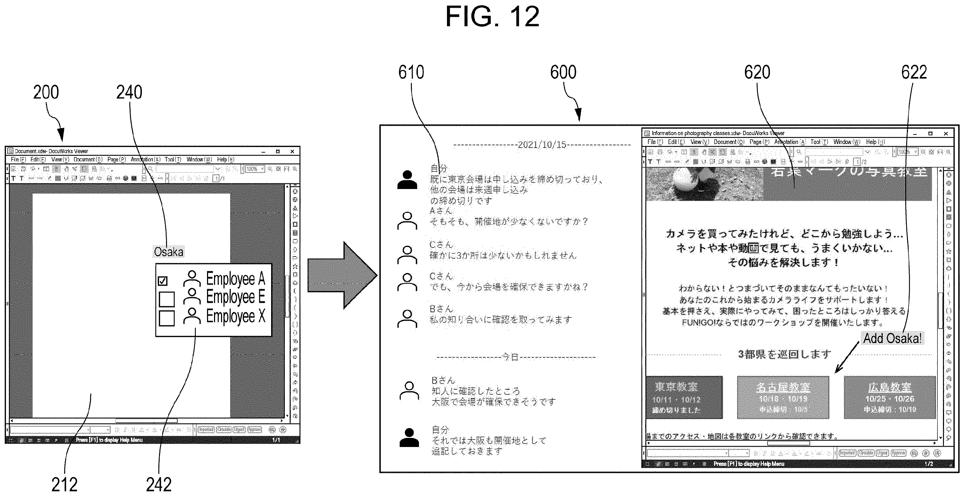

Fig. 12 depicts an example in which the information processing apparatus is configured to cooperate with another application. In this example, the information processing apparatus is configured to cooperate with a communication support tool. A communication support tool is configured to provide an environment in which users are able to chat with each other. The communication support tool is able to use the document management function of the information processing apparatus and present, in the chat screen, the first manipulation screen 100 (refer to Fig. 2) and the second manipulation screen, which are provided by the information processing apparatus. For example, multiple users are each able to present the content of the same document in the first manipulation screen 100 in the chat screen of an individual user terminal. While chatting, the multiple users are able to, for example, check the content of the document and add a memo to the document.

In some cases, the user wants to search for a document discussed in the chat screen of such a communication support tool. It is assumed, for example, that the user remembers that Employee A participated in the chat and that the user added a memo (that is, a text annotation) including a word "Osaka" to a page in a document.

In such a case, the user opens the first imitating manipulation screen 200 and performs a manipulation of adding a text annotation 240 including a character string "Osaka" to the dummy page 212 in the first imitating manipulation screen 200. In response to this manipulation, the search UI 22 presents a UI screen 242 for specifying a participant in the chat. Information regarding candidates for participants in the chat is registered in the search UI 22 in advance or acquired by the search UI 22 from the communication support tool. The UI screen 242 may be presented automatically in response to the addition of the text annotation 240 or presented in response to an explicit instruction from the user to present the UI screen 242. In the latter case, for example, a menu item such as "cooperation with communication support tool" is included in a contextual menu for the text annotation 240, and the UI screen 242 is presented when this menu item is selected. In the contextual menu, other applications capable of cooperating with the information processing apparatus may be included as menu items. Then, in response to the selected menu item, the search UI 22 presents a UI screen for accepting entry of an additional criterion related to an application corresponding to the selected menu item.

The user selects "Employee A", which the user remembers, in the UI screen 242. In response to this selection, the search UI 22 passes a search criterion "type of manipulation = text annotation, character string = Osaka, cooperating application = communication support tool, participant = Employee A" to the search unit 20. The search unit 20 searches the document repository 14 for a document having a history of manipulation matching this search criterion.

To enable a search of this kind, when the document processor 10 and the document processing UI 12, which are cooperating with another application, accept a manipulation, the manipulation recorder 18 records information regarding the other application as a manipulation parameter in the manipulation history 16. For example, the manipulation recorder 18 records information specifying the application as the value of a parameter "cooperating application". For each cooperating application, one or more parameters to be recorded with regard to the application are determined. The manipulation recorder 18 receives the values of the one or more parameters that are determined from an application that is cooperating when a manipulation is accepted, and the manipulation recorder 18 records the values in the manipulation history 16.

A display screen 600 provided by the search UI 22 for a document in the search result has an appearance imitating the UI screen of the communication support tool. The display screen 600 includes a chat display area 610 and a document display area 620. The document display area 620 of these two display areas presents an image of a matching page of the document in the search result (in this example, a page to which a text annotation 622 including a character string "Osaka" is added). The chat display area 610 presents chat sessions at around the time of the manipulation of adding the text annotation 622. Such chat sessions can be presented, for example, by acquiring, from the communication support tool, chat messages entered at around the date and time of the manipulation of adding the text annotation 622 and presenting the chat messages.

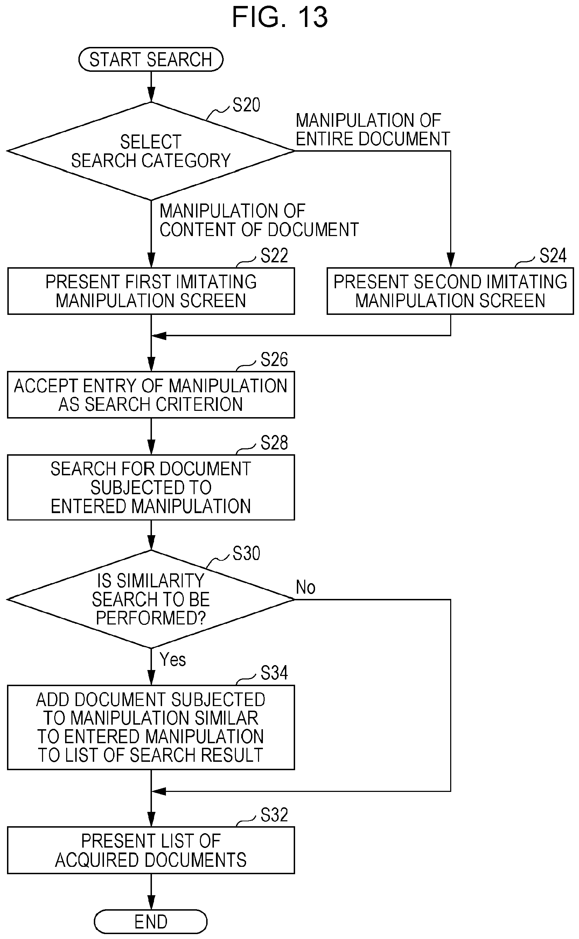

Next, referring to Fig. 13, an example of procedures performed by the search UI 22 and the search unit 20 will be described.

In response to the activation of the search UI 22, the search UI 22 first presents a category-specifying screen for accepting the specification of a search category (step S20).

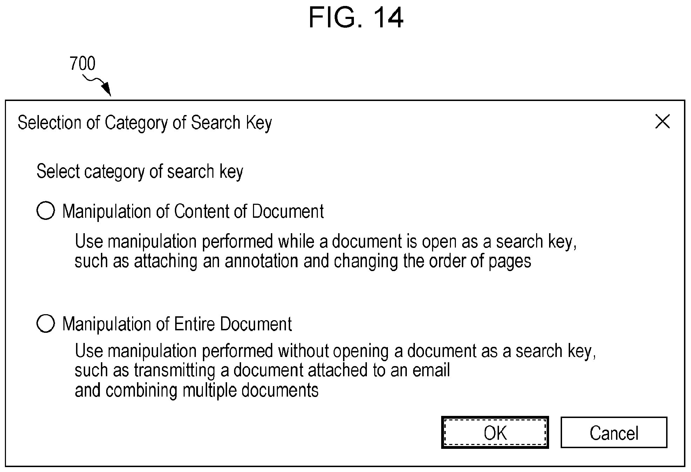

Fig. 14 depicts an example of a category-specifying screen 700. In the category-specifying screen 700, the manipulation of the content of a document and the manipulation of the entire document (that is, a document as a unit) are listed as category alternatives of a search key or a search criterion. The manipulation of the content of a document is a manipulation to be performed while a document is open, such as adding an annotation (that is, a note) including a sticker and a memo or changing the order of pages. The manipulation of the entire document is a manipulation to be performed on a document without opening the document, and examples of such a manipulation include mail transmission, moving the document to a folder, combining, and dividing. A radio button is presented on the left-hand side of each of these two alternatives, and only one of these alternatives can be selected. The user selects a radio button corresponding to the alternative that the user wants, for example, by clicking.

If the user selects the manipulation of the content of a document as a search category, the search UI 22 presents the first imitating manipulation screen 200 (refer to Fig. 5) (step S22). In contrast, if the user selects the manipulation of the entire document as a search category, the search UI 22 presents the second imitating manipulation screen 500 (refer to Fig. 9) (step S24).

Next, the search UI 22 accepts entry of a manipulation performed by the user in the first imitating manipulation screen 200 or the second imitating manipulation screen 500, which is presented (step S26). Then, the search UI 22 passes a search criterion representing details of the entered manipulation (for example, a parameter indicating the type of manipulation) to the search unit 20.

The search unit 20 searches the document repository 14 for a document matching the search criterion (step S28) and generates list information representing the search result from the information regarding the matching documents. The list information includes, for example, information specifying a matching document (for example, a file path name), the number of a page subjected to a manipulation matching the search criterion, the appearance of the page (for example, a thumbnail image of the page), a parameter set for the manipulation, and an attribute of the document.

Next, the search unit 20 determines whether the setting indicates that the similarity search is to be performed (step S30). In the similarity search, the matching condition for each criterion item is relaxed to include a value similar to the value specified in the search criterion.

Here, the similarity search will be described. In the similarity search, one or more matching conditions are more relaxed than in the search in step S28.

In the search in step S28, a document to be searched for is basically a document subjected to a manipulation whose details are identical to the details of the manipulation entered in the first imitating manipulation screen 200 or the second imitating manipulation screen 500. For example, if a manipulation of attaching a blue sticker is performed in the first imitating manipulation screen 200, in step S28, the search unit 20 searches for a document having a history of manipulation whose type is sticker attachment and in which a blue sticker is attached. For a criterion item for which it is fundamentally difficult to reproduce, by a manipulation in the first imitating manipulation screen 200, a value exactly identical to a past value in the history of manipulation, the matching condition does not require a value to be exactly identical and is relaxed to include a value close to the value specified in the search criterion. Examples of a criterion item for which reproducing a past value is difficult in this way include an item having a value that continuously varies, such as a sticker position. In contrast, a document having a value exactly identical to the value in the search criterion is searched for in the search in step S28 for items having discrete values, such as the type of manipulation, the color of a sticker, and a destination of mail transmission.

In the similarity search in contrast to the search in step S28, a document to be searched for is a document satisfying a criterion similar to the search criterion represented by the details of the manipulation entered in the first imitating manipulation screen 200 or the second imitating manipulation screen 500. The largest difference between the similarity search and the search in step S28 is that while a document subjected to a manipulation having a type of manipulation exactly identical to the type of manipulation in the search criterion is searched for in the latter, a document subjected to a manipulation having a type of manipulation that is similar to some extent is searched for in the former. To perform the similarity search, similarity-relation information indicating similarity relations between the types of manipulations is registered in the search unit 20. The similarity-relation information may be, for example, a list enumerating one or more types of manipulations similar to each type of manipulation included in the list. Specifically, examples of similarity-relation information include information indicating that "copying" a document is a type of manipulation similar to "moving" a document and information indicating that "highlighter" is a type of manipulation similar to "sticker attachment".

In addition to these examples, a matching condition in the similarity search may also be more relaxed than in the search in step S28 for one or more criterion items other than the type of manipulation in the search criterion. In such a case, for each criterion item, a range of similarity is registered in the search unit 20 in advance. For example, for the color of a sticker, such as blue, information such as a list enumerating colors in the range of similarity is registered in the search unit 20. For a character color of a text annotation and a background color, similar information is registered. Further, for example, for a sticker position, a distance regarded as being in the range of similarity is also registered in the search unit 20. The distance provides the distance between the sticker position included in the search criterion and the sticker position in each document. The distances regarded as being in the range of similarity are larger than the distances regarded as being in the matching range for a sticker in the search in step S28.

In the similarity search, for each criterion item including the type of manipulation included in the search criterion, the search unit 20 is configured to search for a document having a history of manipulation for which the value of the criterion item is in the range of similarity.

If a negative determination is made in step S30, the search UI 22 presents a list of records in the search result generated by the search unit 20 in the search processing in step S28 (step S32).

If an affirmative determination is made in step S30, the search unit 20 performs the similarity search and adds a search result obtained by the similarity search to the list information (step S34). Then, the search UI 22 presents the list information as the search result (step S32).

Next, description will be given with regard to updating a search criterion and a search result by using the imitating manipulation screen.

After a search result (for example, refer to Fig. 6) is presented in response to a manipulation in the first imitating manipulation screen 200 or the second imitating manipulation screen 500, the user is able to change a search criterion by further changing the manipulation entered in those imitating manipulation screens.

For example, it is assumed that the user obtains the search-result display screen 300 in Fig. 6 in response to a manipulation of attaching a sticker at a position (referred to as a position A) in the page 212 in the first imitating manipulation screen 200 in Fig. 5 but that a document that the user wants cannot be found in the search result in the search-result display screen 300. If the user then comes to realize, for example, the possibility that the sticker is attached to another position (referred to as a position B), the user moves the sticker 220 attached to the first imitating manipulation screen 200 from the position A to the position B and attaches the sticker 220 again. The search UI 22, which accepts this manipulation, changes the sticker position in the search criterion to the position B and then requests the search unit 20 to perform another search. In response to the request, the search unit 20 searches for a document having a history of manipulation of attaching a sticker at the position B and presents the result of this search. The change in the details of manipulation in the first imitating manipulation screen 200, which is described above, and the presentation of the updated research result in response to this change are performed in real time.

In this way, the search UI 22 and the search unit 20 are configured to accept, in a search screen such as the first imitating manipulation screen 200, a manipulation of changing a parameter (in the above example, the sticker position) for a manipulation that provided a search result. The search UI 22 and the search unit 20 are configured to then perform another search by using a search criterion subjected to the parameter change and present the search result.

In this example, the other search is performed when the sticker 220 is dragged to move from the position A and finally dropped at the position B, but this example is given by way of illustration and not by way of limitation. Instead of this operation, while the sticker 220 starts moving from the position A and reaches the position B, a search may be performed at each time point by using the position of the sticker 220 at the time point as a search criterion, and the search result may be presented. In such a case, for example, the list of records in the search result presented in the search-result display screen 300, which is displayed, changes with the sticker position at each time point.

Further, in the example of the manipulation of mail transmission illustrated in Fig. 10, for example, when the destination entered in the destination box 552 is changed or another destination is added, the search criterion is changed, and the search result is updated accordingly.

In the same example described above, it is assumed that the user changes the setting of similarity search to activate the similarity search before the user changes the position of the sticker 220. In such a case, if the user removes the sticker 220 from the position A and attaches the sticker 220 to the position B, the search unit 20 searches for not only a document having a sticker attached at around the position B but also a document subjected to a similar manipulation, such as a highlighter, at around the position B. Consequently, a search result including more documents is presented. The order of the documents presented in the search result is determined based on factors such as the closeness of the type of manipulation and the closeness of the position of a manipulation target (for example, a sticker position and a highlighter position).

In the above example, the search unit 20 and the search UI 22 are included in the information processing apparatus for document management, which is a single application, and associated with the document processor 10 and the document processing UI 12. This example is given only for illustrative purposes.

In another example, the search unit 20 and the search UI 22 may be configured as a search tool associated with multiple applications. In this example, the search UI 22 is configured to provide a search screen imitating the manipulation screen of each of the multiple applications that are associated, the search screen being the imitating manipulation screen. Each imitating manipulation screen has GUI components having appearances identical or similar to the appearances of the GUI components included in the manipulation screen of the associated application. In this way, the imitating manipulation screen provides the user with operability similar to the operability of the manipulation screen of the associated application. With an action similar to the action for entering a manipulation in the manipulation screen, the user is able to enter the identical manipulation in the imitating manipulation screen. The search UI 22 is configured to pass information specifying the details of the entered manipulation to the search unit 20 as a search criterion. The search unit 20 is configured to search information regarding the application in the manipulation history 16 for a document having a history of manipulation matching the search criterion. The search UI 22 is configured to present a list of records in the search result.

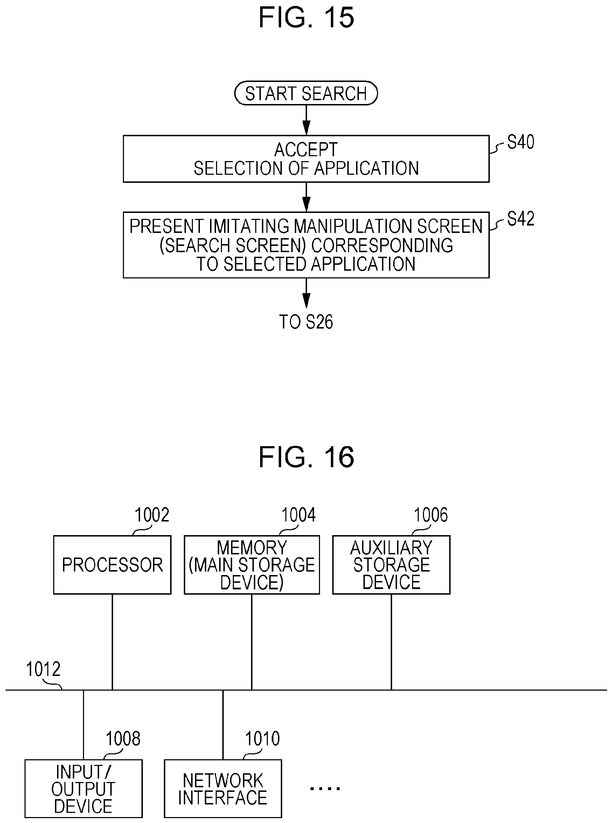

Fig. 15 illustrates procedures of the search tool in this example. In these procedures, in response to the activation of the search tool, the search UI 22 accepts selection of an application as a search target (step S40). In this example, for example, the search UI 22 presents a screen displaying the multiple applications as alternatives, and the user selects an application in the screen as the present search target. In response to the selection, the search UI 22 presents an imitating manipulation screen corresponding to the selected application (step S42). Then, the search UI 22 and the search unit 20 may perform processes similar to the process in step S26 and the processes that follow in Fig. 13.

The information processing apparatus according to the exemplary embodiment described above is formed, for example, by using a general-purpose computer. As illustrated in Fig. 16, the computer has a circuit configuration in which a processor 1002, a memory (main storage device) 1004 such as a random-access memory (RAM), a controller that controls an auxiliary storage device 1006 formed by a non-volatile storage device, such as a flash memory, a solid state drive (SSD), or a hard disk drive (HDD), an interface to connect to various input/output devices 1008, a network interface 1010 that performs control to connect to a network such as a local area network, and other devices are connected by using a data transmission line such as a bus 1012. Details of the processes according to the exemplary embodiment described above are described in a program, and the program is installed into the computer via a network or the like and stored in the auxiliary storage device 1006. The program stored in the auxiliary storage device 1006 is loaded into the memory 1004 and executed by the processor 1002, and the information processing apparatus according to the present exemplary embodiment is configured.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
execute a first acceptance process of accepting one or more manipulations each performed on a corresponding piece of data in a manipulation screen;
execute a recording process of recording each of the one or more manipulations in association with the corresponding piece of data;
execute a second acceptance process of accepting a search manipulation in a search screen configured to imitate the manipulation screen; and
execute a presentation process of presenting at least one piece of data associated with the search manipulation accepted in the second acceptance process.

2. The information processing apparatus according to Claim 1,
wherein the processor is configured to:
accept, in the first acceptance process, entry of the one or more manipulations each performed on a portion of the corresponding piece of data presented in the manipulation screen;
further record, in the recording process, information for specifying the portion in association with each of the one or more manipulations and the corresponding piece of data;
identify, in the second acceptance process, a portion of a piece of data as a target portion, the portion being subjected to the search manipulation that has been accepted; and
provide, in the presentation process, a search result for presenting the target portion of the at least one piece of data associated with the search manipulation accepted in the second acceptance process.

3. The information processing apparatus according to Claim 1 or 2,
wherein the processor is configured to:
accept an instruction indicating whether a portion of a piece of data is subjected to a manipulation or whether an entire piece of data is subjected to a manipulation;
when an instruction indicating that a portion of a piece of data is subjected to a manipulation has been accepted, present a first search screen imitating a manipulation screen for accepting a manipulation of content of a piece of data in the second acceptance process and accept a search manipulation in the first search screen; and
when an instruction indicating that an entire piece of data is subjected to a manipulation has been accepted, present a second search screen imitating a manipulation screen for accepting a manipulation of the entire piece of data in the second acceptance process and accept a search manipulation in the second search screen.

4. The information processing apparatus according to any one of Claims 1 to 3,
wherein the processor is configured to:
in the presentation process, refer to similarity-relation information that specifies a similarity relation between manipulations and present the at least one piece of data associated with the search manipulation accepted in the second acceptance process and at least one piece of data associated with a manipulation determined based on the similarity-relation information to be similar to the search manipulation accepted in the second acceptance process.

5. The information processing apparatus according to any one of Claims 1 to 4,
wherein the processor is configured to:
after executing the presentation process, accept, in the search screen, a manipulation of changing a parameter for the search manipulation accepted in the second acceptance process and present at least one piece of data associated with the search manipulation having the parameter obtained after the manipulation of changing.

6. The information processing apparatus according to any one of Claims 1 to 5,
wherein the processor is configured to:
accept selection of an application; and
accept, in the second acceptance process, the search manipulation in the search screen imitating the manipulation screen corresponding to the selected application.

7. The information processing apparatus according to any one of Claims 1 to 6,
wherein the search screen is generated based on setting information for a user, the setting information being used to generate the manipulation screen for a user who has performed the search manipulation in the second acceptance process.

8. The information processing apparatus according to any one of Claims 1 to 7,
wherein the processor is configured to:
present a narrowing-down screen and accept entry of a narrowing-down criterion into the narrowing-down screen when the number of the at least one piece of data associated with the search manipulation accepted in the second acceptance process exceeds a threshold; and
present a piece of data satisfying the narrowing-down criterion that is entered into the narrowing-down screen, the piece of data being selected from the at least one piece of data associated with the search manipulation accepted in the second acceptance process.

9. A program causing a computer to execute a process, the process comprising:
executing a first acceptance process of accepting one or more manipulations each performed on a corresponding piece of data in a manipulation screen;
executing a recording process of recording each of the one or more manipulations in association with the corresponding piece of data;
executing a second acceptance process of accepting a search manipulation in a search screen configured to imitate the manipulation screen; and
executing a presentation process of presenting at least one piece of data associated with the search manipulation accepted in the second acceptance process.

10. An information processing method comprising:
executing a first acceptance process of accepting one or more manipulations each performed on a corresponding piece of data in a manipulation screen;
executing a recording process of recording each of the one or more manipulations in association with the corresponding piece of data;
executing a second acceptance process of accepting a search manipulation in a search screen configured to imitate the manipulation screen; and
executing a presentation process of presenting at least one piece of data associated with the search manipulation accepted in the second acceptance process.
